# EUROPEAN PATENT APPLICATION

(11) **EP 4 389 789 A1**
(43) Date of publication of application: **26.06.2024**
(21) Application number: 23217429.2
(22) Date of filing: 18.12.2023
(51) Int. Cl.: C08G 8/24, C08G 8/10, C08G 8/18

(54) **USE OF HYDROXYBENZOIC ACID TO MODIFY A BENZYL ETHER TYPE RESIN**

(30) Priority: 21.12.2022 LU 503237
(71) Applicant: Prefere Resins Holding GmbH, 15537 Erkner (DE)
(72) Inventor: Winter, Johannes Georg, 58239 Schwerte (DE); Heier, David Werner Jürgen, 12589 Berlin (DE); Herbeck, Maximilian Andreas, 12557 Berlin (DE); Peterschofsky, Karin, 3500 Krems (AT); Hanifogl, Ronald, 3495 Rohrendorf (AT); Prock, Christoph, 3910 Zwettl (AT)

(57) **Abstract**

The present invention concerns a benzyl ether type resin made from at least one or more hydroxybenzoic acid compounds, one or more phenol compounds, and one or more carbonyl compounds. The invention further relates to a method for producing the inventive benzyl ether type resin, and to the use of the inventive benzyl ether type resin for the production of foams, foundry materials, refractory materials, abrasive materials, construction materials, insulation materials and lubricants.

## Description

### INTRODUCTION

The present invention concerns a benzyl ether type resin made from at least one or more hydroxybenzoic acid compounds, one or more phenol compounds, and one or more carbonyl compounds. The inventive resin is particularly useful in cold box methods for phenolic resins and isocyanates (PUCB methods) and/or no bake methods for phenolic resins and isocyanates (PUNB methods). The invention further relates to a method for producing the inventive benzyl ether type resin, and to the use of the inventive benzyl ether type resin for the production of foams, foundry materials, refractory materials, abrasive materials, construction materials, insulation materials and lubricants.

### BACKGROUND OF THE INVENTION

The manufacture of cores and molds using the PUCB and/or the PUNB process has achieved great significance in the foundry industry. Here, two-component polyurethane systems are used to bond a refractory mold base material. The polyol component is comprised of a polyol with at least two OH-groups per molecule, the isocyanate component of an isocyanate with at least two NCO-groups per molecule. Phenol formaldehyde resins are among the polyol components used. As described in US 3,409,579, curing the mixture of the mold base material and binder, also referred to as the mold material mixture for brevity, takes place in the PUCB process with the aid of low boiling point tertiary amines which are passed through the mold material mixture after molding in gaseous form or as an aerosol. Usually this ensues with the help of a carrier gas, such as air, nitrogen or CO₂, into which at least one tertiary amine has been metered. In the PUNB process, addition of liquid tertiary amines and/or metal compounds as catalysts takes place to the mold material mixture.

Previous phenolic resins of the benzyl ether type (with reference to the pure phenolic resin, without solvent and additives), made from phenol as the sole phenolic base material and formaldehyde, are described e. g. in US 3,485,797. Basically, such resins are obtained by reacting a phenol with an aldehyde in an anhydrous liquid phase below 130 °C and in the presence of a catalytic amount of a metal ion dissolved in the reaction medium. If the temperature is above 100 °C, the resulting products may be thermoset by addition of a Lewis acid. If phenol is in excess in the initial reaction, the product is a novolak with phenol end groups and ortho-ortho dimethylene ether links and methylene links. This may be cross-linked with hexamethylene tetramine. In examples, phenol and m-cresol are condensed with paraformaldehyde in benzene. Catalysts specified are Pb neodecanoate, Zn naphthenate, Fe (III) octoate, Pb naphthenate, Zn neodecanoate, Li neodecanoate, Mn naphthenate, Co neodecanoate, Cu naphthenate, Ca naphthenate, Mn neodecanoate, Ca neodecanoate, Ca naphthenate and Co naphthenate. The products are cured with p-toluene sulphonic acid and BF₃.

EP 1 137 500 relates to a binder system that comprises a phenolic resin component and a polyisocyanate component. This system is characterised in that the phenolic resin component includes an alkoxy-modified phenolic resin, wherein less than 25 mol % of the phenolic hydroxy groups are etherified with a primary or secondary aliphatic alcohol comprising between 1 and 10 carbon atoms.

DE 10 2015 107 016 A1 relates to a process for the production of benzyl ether resins and molding mixtures containing such benzyl ether resins for the phenolic resin-polyurethane cold box process (PUCB process) and/or the phenolic resin-polyurethane no-bake process (PUNB process), where the benzyl ether resins have a low residual content of free formaldehyde. The invention also relates to a method for producing mold material mixtures and a kit for producing the mold material mixtures for the production of cores and casting molds for metal casting or for coating fertilizers in granular form.

### TASK OF THE INVENTION

The task of the invention is to provide a benzyl ether type resin which shows improved solubility and is thereby less likely to form precipitations when mixed with organic solvents and additives. Furthermore, it is a task of the invention to provide a benzyl ether type resin that shows buffering capacity at a pH lower than 7 and/or the ability to act as chelating agent for transition metal cations, is storage-stable and does not result in precipitations.

### SUMMARY OF THE INVENTION

The task can be solved by the subject matter of the independent claims. Advantageous modifications are the subject matter of the dependent claims or are described below.

Thus, the subject matter of the invention is to provide a benzyl ether type resin made from at least one or more hydroxybenzoic acid compounds according to formula (I), one or more phenol compounds according to formula (II), and one or more carbonyl compounds according to formula (III): 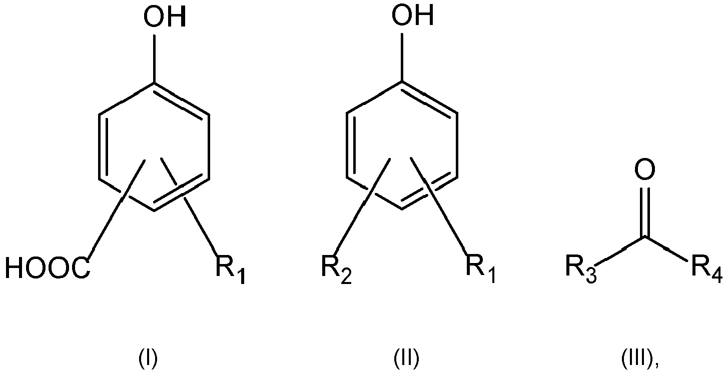 wherein:
each R₁ is independently selected from hydrogen and saturated or unsaturated, straight-chained or branched C1 to C26 alkyl in an ortho-, meta- or para-position with respect to the phenolic hydroxy group;
each R₂ is independently selected from hydrogen, -OH, -CH₂C₆H₅ (benzyl), -OCH₃, - CH₂OH and -CH₂O-R with R being saturated or unsaturated, straight-chained or branched C1 to C9 alkyl;
each R₃ is independently selected from hydrogen and saturated or unsaturated, cyclic, straight-chained or branched C1 to C7 alkyl;
each R₄ is independently selected from hydrogen and saturated or unsaturated, cyclic, straight-chained or branched C1 to C7 alkyl.

Surprisingly, it was found that the benzyl ether type resins of the present invention show improved solubility and are thereby less likely to form precipitates when mixed with organic solvents and additives. Furthermore, it was surprisingly found that benzyl ether type resins of the present invention show buffering capacity at a pH lower than 7 and/or the ability to act as chelating agent for transition metal cations, are storage-stable and do not result in precipitations.

Furthermore, the invention concerns a method for producing the inventive benzyl ether type resin. The subject matter of the invention also is the use of the inventive benzyl ether type resin for the production of foams, foundry materials, refractory materials, abrasive materials, construction materials, insulation materials and lubricants.

### DETAILED DESCRIPTION OF THE INVENTION

All conventionally used phenolic compounds are suitable for making phenolic resins of the benzyl ether type. Along with unsubstituted phenols, substituted phenols or mixtures of these can be used. The phenol compounds are preferably not substituted either in both ortho positions or in one ortho position and in the para position. The remaining carbon atoms in the ring can be substituted. Examples of substituted phenols are alkyl-substituted, alkoxy-substituted, aryl-substituted and aryloxy-substituted phenols.

The basic structure of a phenolic resin of the benzyl ether type in accordance with the invention has, along with -CH₂ linked phenol units, -CH₂-O-CH₂- linked phenol units and can be represented with reference to a product implemented with only formaldehyde and salicylic acid as a non-limiting example as follows:

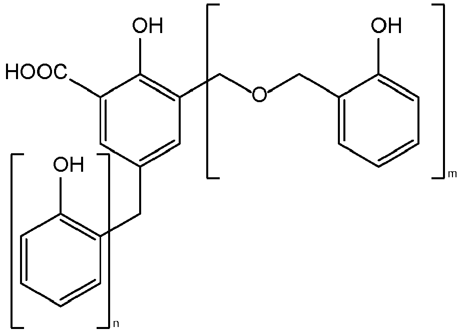

The various units are typically distributed statistically (i.e. also joined in a sequence other than that shown above). The phenol unit can also have a para bond to some extent. Here, when a substituent R₁ on the phenolic ring is present, it can for each phenolic ring be independently selected from hydrogen and C1 to C26 alkyl (saturated or unsaturated, straight-chained or branched) in an ortho, meta or para position with respect to the phenolic hydroxy group. When a further substituent R₂ on the phenolic ring is present, it can for each phenolic ring be independently selected from hydrogen, -OH, -CH₂OH and CH₂O-R with R = C1 to C9 alkyl. The R₁ and R₂ groups can be straight-chained or branched, saturated or unsaturated.

The aforementioned substituents have, for example, 1 to 26, preferably 1 to 15 carbon atoms. Examples of suitable phenols are o-cresol, m-cresol, p-cresol, 3,5-xylenol, 3,4-xylenol, 3,4,5-trimethylphenol, 3-ethylphenol, 3,5-diethylphenol, p-butylphenol, 3,5-dibutylphenol, p-amylphenol, cyclohexylphenol, p-octylphenol, p-nonylphenol, cardanol, 3,5-dicyclohexylphenol, p-crotylphenol, p-phenylphenol, 3,5-dimethoxyphenol, p-phenoxyphenol and benzylphenol.

Phenol itself is particularly preferred. Even more highly condensed phenols, such as Bisphenol A, are also suitable. Furthermore, multifunctional phenols are also suitable, i.e. those having more than one phenolic hydroxyl group.

Preferred multifunctional phenols have 2 to 4 phenolic hydroxyl groups. Particular examples of suitable multifunctional phenols are pyrocatechol, resorcinol, hydroquinone, pyrogallol, phloroglucinol, 2,5-dimethylresorcinol, 4,5-dimethylresorcinol, 5-methylresorcinol, cardol or 5-ethylresorcinol. Mixtures of various mono- and multifunctional and/or substituted and/or condensed phenolic components can also be used for making the phenolic resin of the benzyl ether type. Phenol sources of natural origin can also be used. In preferred embodiments, in addition to the at least one or more hydroxybenzoic acid compounds according to formula (I), the one or more phenol compounds according to formula (II), and the one or more carbonyl compounds according to formula (III), the benzyl ether type resin according to the invention is also made from one or more lignin compounds. The one or more lignin compounds may be selected from the group consisting of organosolv lignin, kraft-lignin, steam explosion lignin and mixtures thereof. However, any other commercially available lignin compounds are also suitable.

In one embodiment, phenols of the following general Formula 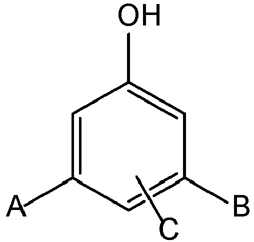 are used to make the phenolic resin of the benzyl ether type, with A, B and C being chosen independently of one another from: a hydrogen atom, a branched or unbranched alkyl or alkenyl group which can have, for example, 1 to 26, preferably 1 to 15 carbon atoms, a branched or unbranched alkoxy group, which can have, for example, 1 to 26, preferably 1 to 15 carbon atoms, a branched or unbranched alkenoxy group, which can have, for example, 1 to 26, preferably 1 to 15 carbon atoms, and an aryl or benzyl or alkylaryl group, such as bisphenyl.

The carbonyl compounds for making the inventive resins of the benzyl ether type are of the following formula 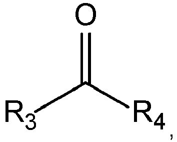 where each R₃ is independently selected from hydrogen and saturated or unsaturated, cyclic, straight-chained or branched C1 to C7 alkyl, and each R₄ is independently selected from hydrogen and saturated or unsaturated, cyclic, straight-chained or branched C1 to C7 alkyl. Formaldehyde is used with particular preference, either in its liquid form, as paraformaldehyde or trioxane.

In order to obtain the inventive resins of the benzyl ether type, preferably an at least equivalent molar quantity of carbonyl compounds is used with reference to the number of moles of the phenolic compounds. The molar ratio of carbonyl compound to phenol compound preferably is between 1.00 and 2.00, more preferred between 1.10 and 1.90, even more preferred between 1.20 and 1.80, and most preferred between 1.30 and 1.70.

The one or more hydroxybenzoic acid compounds are selected from 2-hydroxybenzoic acid (salicylic acid), 3-hydroxybenzoic acid and 4-hydroxybenzoic acid, with salicylic acid being preferred. Preferably, the amount of hydroxybenzoic acid based on the total amount of the resin is 0.1 - 20 wt.-%, more preferred 0.2 - 10 wt.-%, even more preferred 0.3 - 5 wt.-%, and most preferred 0.5 - 2 wt.-%.

The production of the inventive benzyl ether type resin may take place in accordance with the following embodiment. Here, the phenol compounds, carbonyl compounds and hydroxybenzoic acid compounds are converted in the presence of a divalent metal ion at temperatures of preferably less than 130° C. The water formed in this process step is distilled off. A suitable entrainer can be added to the reaction mixture for this, such as toluene or xylene, or the distillation is performed at reduced pressure.

Suitable catalysts for producing the inventive benzyl ether type resins are salts of divalent ions of metals such as Mn, Zn, Cd, Mg, Co, Ni, Fe, Pb, Ca and Ba, in particular Zn salts. Zinc acetate is used preferably. Typical quantities of metal catalyst comprise 0.02 to 2.0 weight percent, preferably 0.02 to 0.18 weight percent with reference to the total quantity of phenol compounds, hydroxybenzoic acid compounds and carbonyl compounds.

According to the invention, a method for producing the benzyl ether type resin as described before comprises the steps of:
(a) providing a mixture of one or more phenol compounds, one or more carbonyl compounds, one or more hydroxybenzoic acid compounds, a catalyst and optionally one or more solvents and/or one or more bases;
(b) reacting the mixture from step (a);
(c) isolating the reaction product from the mixture obtained in step (b);
(d) optionally adding one or more solvents and/or one or more additives, such as quenchers.

Preferably, step (b) is performed at a temperature of 70 - 130°C, more preferably at a temperature of 110 - 120 °C.

Preferably, the reaction product isolated in step (c) has a refractive index of 1.450 - 1.650, more preferred 1.480 - 1.600, even more preferred 1.500 - 1.580.

Suitable bases are for example alkali hydroxides, alkaline earth hydroxides, amines, and carbonates. Suitable quenchers are for example inorganic and organic acids.

In cases where the benzyl ether type resins of the present invention are used in a PUR binder system, the isocyanate component of the binder system may comprise an aliphatic, cycloaliphatic or aromatic monomeric or polymeric isocyanate, preferably with an average of 2 to 5 isocyanate groups per molecule. Depending on the desired properties, mixtures of isocyanates can also be used.

Suitable isocyanates include aliphatic isocyanates, such as hexamethylene diisocyanate, alicyclic isocyanates such as 4,4'-dicyclohexylmethane diisocyanate and dimethyl derivatives thereof. Examples of suitable aromatic isocyanates are toluene-2,4-diisocyanate, toluene-2,6-diisocyanate, 1,5-naphthalene diisocyanate, triphenylmethane tri-isocyanate, xylene diisocyanate and methyl derivatives thereof, as well as polymethylene polyphenyl isocyanates. Preferred isocyanates are aromatic isocyanates, with polymethylene polyphenyl polyisocyanates preferred in particular, such as technical 4,4'-diphenylmethane diisocyanate, i.e. 4,4'-diphenylmethane diisocyanate with a portion of isomers and higher homologues.

The isocyanates can also be derivatized by converting isocyanates capable of forming bonds with one another in such a way that a portion of their isocyanate groups is derivatized to form biuret, allophanate, uretdione or carbodiimide groups. Uretdione groups having dimerization products, such as MDI or TDI for example, are of special interest. However, such derivatized isocyanates are preferably used as only one component along with the non-derivatized isocyanates above.

Preferably, the isocyanate is used in a quantity where the number of isocyanate groups amounts to 80 - 120% with reference to the number of free hydroxyl groups of the resin.

The isocyanate component of the binder system is used preferably as a solution in an organic solvent or a combination of organic solvents. Solvents can thus be required, for example, in order to maintain the components of the binder in a sufficiently low viscosity condition. This is beneficial, among other things, in order to obtain uniform cross-linking of the refractory mold material and maintain its free-flowing characteristics.

The polyol component of the binder system is also used preferably as a solution in an organic solvent or a combination of organic solvents. Solvents can thus be required, for example, in order to maintain the components of the binder in a sufficiently low viscosity condition. This is beneficial, among other things, in order to obtain uniform cross-linking of the refractory mold material and maintain its free-flowing characteristics.

Known aromatic solvents can be used as a solvent for the polyol component. Starting from benzene, alkyl and/or alkenyl groups are substituted on the aromatic ring independent of one another, these having a chain length of C1 to C30, preferably from C1 to C20, and with particular preference from C1 to C16. Independent of one another, one to six hydrogen atoms on the benzene ring can be substituted by an alkyl and/or alkenyl group; preferably, 1 to 4, particularly preferably 1 to 3 hydrogen atoms on the ring are substituted. Irrespective of this, the alkyl or alkenyl chain can be straight or branched.

Furthermore, oxygen-rich organic solvents can be used. Dicarboxylic acid esters, glycol ether esters, glycol diesters, glycol diethers, cyclic ketones, cyclic esters (lactones), cyclic carbonates or silicic acid esters or their mixtures are particularly suitable. Dicarboxylic acid esters, cyclic ketones, silicic acid esters and cyclic carbonates are used preferably.

Typical dicarboxylic acid esters have the formula R₁OOC-R₂-COOR₁, in which R₁ groups are in each case independent of one another and are selected from alkyl groups with 1 to 12 carbon atoms, preferably 1 to 6 carbon atoms, and R₂ is a straight-chained or branched hydrocarbon group with 1 to 7 carbon atoms. Examples are dimethyl esters of carboxylic acids with 4 to 6 carbon atoms.

Typical glycol ether esters are compounds with the formula R₃-O-R₄-OOCR₅, where R₃ is an alkyl group with 1 to 4 carbon atoms, R₄ is a hydrocarbon group with 2 to 4 carbon atoms and R₅ is an alkyl group with 1 to 3 carbon atoms, such as butyl glycol acetate; glycol ether acetates are preferred.

Typical glycol diesters correspondingly have the general formula R₃-COO-R₄-OOCR₅, where R₃ to R₅ are as defined above and the groups are selected independently of one another in each case (such as propylene glycol diacetate). Glycol diacetates are preferred. Glycol dieethers can be characterized by the formula R₃-O-R₄-O-R₅, in which R₃ to R₅ are defined as above and the groups are selected independently of one another in each case (such as dipropylene glycol dimethyl ether).

Typical cyclic ketones, cyclic esters and cyclic carbonates with 3 to 5 carbon atoms are also suitable (such as propylene carbonate). The carbon atoms can be joined in a branched or unbranched manner and can be saturated or unsaturated.

Fatty acid esters R₆-OOCR₇ are also suited with R₇ being a C8 to C32 hydrocarbon group and R₆ a C1 to C9 hydrocarbon group, in particular C1 to C4, such as rapeseed oil fatty acid methyl ester, oleic acid butyl ester and isopropyl esters of various fatty acids.

Silicic acid esters are also suitable in their monomeric form or as oligomers. Suitable alkyl/alkoxy silanes or alkyl/alkoxy siloxanes are, for example, esters of orthosilicic acid in which 1, 2 or 3 alcohol groups are replaced by substituted or unsubstituted hydrocarbon groups, compounds of the formula RₙSi(OR')₄₋ₙ in which n=1, 2 or 3, and in which each R and R' group refers to an organic group, preferably a branched or unbranched C1 to C30 alkyl or aryl group. Here R and R' is a substituted or unsubstituted, branched or unbranched hydrocarbon group and the R and R' groups are, in the case of n=2 or 3, the same or different. It is preferred that the R and R' groups be substituted or unsubstituted, branched or unbranched C1 to C30 alkyl or substituted or unsubstituted aryl and particularly preferably substituted or unsubstituted, branched or unbranched C1 to C6 alkyl or substituted or unsubstituted C6 to C10 aryl. Unsubstituted, branched or unbranched C1 to C6 alkyl or unsubstituted phenyl is most preferred. Methyl, ethyl and propyl are in turn particularly preferred here.

Modified esters are preferred, selected from the group consisting of tetraalkoxy silanes, monoalkyltrialkoxy silanes, dialkyldialkoxy silanes, trialkylmonoalkoxy silanes, monoaryltrialkoxy silanes, diaryldialkoxy silanes, and triarylmonoalkoxy silanes, in which the alkyl or alkoxy groups are preferably C1 to C6 alkyl groups. It is preferred that these be modified esters selected from the group comprised of methyl trimethoxy silane, methyl triethoxy silane, methyl tripropoxy silane, methyl tributoxy silane, ethyl trimethoxy silane, ethyl triethoxy silane, n-propyl trimethoxy silane, n-propyl triethoxy silane, isopropyl trimethoxy silane, isopropyl triethoxy silane, vinyl trimethoxy silane, vinyl triethoxy silane, 3-glycidoxipropyl trimethoxy silane, 3-glycidoxipropyl triethoxy silane, 3,4-epoxycyclohexyl trimethoxy silane, dimethoxy dimethyl silane, diethoxy dimethyl silane, diethyl-n-dimethoxy silane and diethyl diethoxy silane.

Tetraethylortho- and tetrapropylorthosilicates or mixtures of their oligomers are particularly preferred.

Either aromatic solvents, the aforementioned polar solvents or mixtures thereof are used as a solvent for the isocyanate. Fatty acid esters and silicic acid esters are also suitable.

The proportion of the solvent in the binder is not particularly limited.

Along with the constituents already mentioned, the binder systems can contain further additives, such as silanes, internal release agents such as fatty alcohols, drying oils, complexing agents and additives for extending the processing time, flow improvers of the silicone surfactant type or mixtures thereof.

Conventional and known materials for producing cast molds and their mixtures can be used as refractory mold base material (also referred to as "mold base material" for brevity below). Examples of suitable materials are quartz sand, zircon sand, chrome ore sand, olivine, vermiculite, bauxite, fireclay and so-called artificial mold base materials, i.e. mold base materials brought into spherical or nearly spherical shape (for example, ellipsoids) by industrial shaping processes.

Examples are glass beads, glass granulate or artificial, spherical ceramic sands as well as hollow microspheres as they can be isolated, such as aluminum silicate hollow spheres (microspheres). Mixtures of the refractory materials mentioned are also possible.

Especially preferred are refractory materials which contain more than 50 weight percent of quartz sand with reference to the mold base material. A refractory mold base material is understood to be one which has a high melting point (melting temperature). Preferably the melting point of the refractory mold base material is greater than 600 °C, more preferably greater than 900 °C, particularly preferably greater than 1200 °C, and most preferably greater than 1500 °C.

The refractory mold base material preferably comprises more than 80 weight percent, in particular more than 90 weight percent, and particularly preferably more than 95 weight percent of the mold material mixture.

The average diameter of the refractory mold base materials generally ranges between 100 µm and 600 µm, preferably between 120 µm and 550 µm and with particular preference between 150 µm and 500 µm. The particle size can be determined, for example, by passing through a sieve in accordance with DIN ISO 3310. There is a particular preference for particle shapes with the largest extension of length having a ratio to the smallest extension of length (at right angles to one another and in each case for all spatial directions) of 1:1 to 1:5 or 1:1 to 1:3, i.e. those which are, for example, not fiber-shaped.

The refractory mold base material preferably is in a free-flowing condition, in particular in order to be able to process the inventive mold material mixture in conventional core shooters.

Tertiary amines are suitable catalysts. Volatile tertiary amines are used for the PUCB process, such as trimethyl amine ("TMA"), dimethyl ethyl amin ("DMEA"), dimethyl n-propylamine ("DMPA"), dimethyl isopropylamine ("DMIPA"), diethyl methyl amine ("DEMA"), triethyl amine ("TEA"), tri-n-propyl amine, tri-isopropyl amine, tri-n-butyl amine and tri-isobutyl amine.

Liquid tertiary amines are used for the PUNB process. At room temperature (25 °C) this includes liquid tertiary amines as well as those which become liquid after heating to 40 °C, for example, or those which are dissolved in a suitable solvent. Examples are 4-(C1-C4 alkyl) pyridines such as tris-(3-dimethylamino) propylamine and iso-quinoline as well as aryl pyridines such as phenyl pyridine, pyridine, acridine, 2-methoxypyridine, pyridazine, 3-chloropyridine, quinoline, N-methylimidazole, N-ethylimidazole, 4,4'-dipyridine, 4-phenylpropylpyridine, 1-methylbenzimidazole and 1,4-thiazine.

Mold material mixtures can be produced according to the following method, comprising
(a) mixing of refractory mold base materials with the binder in a quantity of 0.2 to 12 weight percent, preferably 0.3 to 13 weight percent, particularly preferably 0.4 to 12 weight percent with reference to the quantity of refractory mold base materials and a catalyst, added at the same time (in the PUNB process) or separately later (in the PUCB process) to obtain a mold material mixture;
(b) placement of the mold material mixture obtained in step (a) in a mold tool;
(c) possible addition of the catalyst added separately later (PUCB) and hardening of the mold material mixture in the mold tool with the catalyst to obtain a core or a cast mold; and
(d) subsequent separation of the core or the cast mold from the tool and possibly further hardening.

For the production of the mold material mixture, the components of the binder system can first be combined and then added to the refractory mold base material. However, it is also possible to add the components of the binder to the refractory mold base material at the same time or one after the other in any sequence.

Conventional methods can be used to obtain a uniform mixture of the components for the mold material mixture. The mold material mixture can also contain other conventional constituents, such as iron oxide, ground flax fibers, sawdust granulate, pitch, flow improvers of the silicon surfactant type and refractory metals.

In the case of the PUCB process, for hardening, a low boiling point tertiary amine is passed through the shaped mold material mixture using an inert gas or an inert aerosol. There is no addition of a separate catalyst. All known cold box amine catalysts can be used.

In the case of the PUCB process, the amine catalyst can already be dissolved in the binder or mixed with the refractory material as a separate component, with the added amount comprising approximately 0.1 weight percent to approximately 5 weight percent with reference to the mold material mixture.

The mold bodies produced according to this method can have any conventional shape employed in foundries. In one preferred embodiment, the mold bodies are present in the shape of casting molds, cores or risers. These are distinguished by high mechanical stability.

Apart from foundry materials, the invention further concerns the use of the benzyl ether type resin described herein for the production of foams, refractory materials, abrasive materials, construction materials, insulation materials and lubricants.

The invention is described below in more detail based on experimental examples without being limited to these.

### EXAMPLES

### Example 1: Synthesis of benzyl ether type resins

### Resin 1 (not according to the invention):

A mixture of 337.8 g phenol and 152.3 g paraformaldehyde were placed with 108.1 g n-butanol and 6.0 g methanol in a reaction vessel equipped with a stirrer, reflux condenser and thermometer. The amount of 0.6 g zinc acetate dihydrate was added as the catalyst. The solid components were dissolved by stirring. The temperature in the reaction vessel was adjusted continuously to an elevated temperature of 115°C under reflux and maintained when the temperature was reached. Thereafter, the condenser was set to the distillate outlet and the temperature of the reaction mixture was optionally increased to ease distillation. Distillation was continued at this temperature under atmospheric pressure until a refractive index of 1.600 was reached. After the refractive index had been reached, a vacuum was applied to the apparatus and the mixture was distilled at reduced pressure (about 50 - 100 mbar) up to a temperature of 90°C.

### Resin 2 (not according to the invention):

A mixture of 437.7 g phenol and 303.7 g paraformaldehyde were placed with 162.6 g n-butanol and 9.0 g methanol in a reaction vessel equipped with a stirrer, reflux condenser and thermometer. The amount of 0.9 g zinc acetate dihydrate was added as the catalyst. The solid components were dissolved by stirring. The temperature in the reaction vessel was adjusted continuously to an elevated temperature of 115°C under reflux and maintained when the temperature was reached. Thereafter, the condenser was set to the distillate outlet and the temperature of the reaction mixture was optionally increased to ease distillation. Distillation was continued at this temperature under atmospheric pressure until a refractive index of 1.600 was reached. After the refractive index had been reached, a vacuum was applied to the apparatus and the mixture was distilled at reduced pressure (about 50 - 100 mbar) up to a temperature of 90°C.

### Resin 3 (according to the invention):

A mixture of 508.0 g phenol, 4.5 g salicylic acid and 229.0 g paraformaldehyde were placed with 162.6 g n-butanol and 9.0 g methanol in a reaction vessel equipped with a stirrer, reflux condenser and thermometer. The amount of 0.9 g zinc acetate dihydrate was added as the catalyst. The solid components were dissolved by stirring. The temperature in the reaction vessel was adjusted continuously to an elevated temperature of 115°C under reflux and maintained when the temperature was reached. Thereafter, the condenser was set to the distillate outlet and the temperature of the reaction mixture was optionally increased to ease distillation. Distillation was continued at this temperature under atmospheric pressure until a refractive index of 1.600 was reached. After the refractive index had been reached, a vacuum was applied to the apparatus and the mixture was distilled at reduced pressure (about 50 - 100 mbar) up to a temperature of 90°C.

### Resin 4 (according to the invention):

A mixture of 291.1 g phenol, 6.0 g salicylic acid and 202.0 g paraformaldehyde were placed with 108.1 g n-butanol and 6.0 g methanol in a reaction vessel equipped with a stirrer, reflux condenser and thermometer. The amount of 0.6 g zinc acetate dihydrate was added as the catalyst. The solid components were dissolved by stirring. The temperature in the reaction vessel was adjusted continuously to an elevated temperature of 115°C under reflux and maintained when the temperature was reached. Thereafter, the condenser was set to the distillate outlet and the temperature of the reaction mixture was optionally increased to ease distillation. Distillation was continued at this temperature under atmospheric pressure until a refractive index of 1.600 was reached. After the refractive index had been reached, a vacuum was applied to the apparatus and the mixture was distilled at reduced pressure (about 50 - 100 mbar) up to a temperature of 90°C.

### Example 2: Testing of the benzyl ether type resins of example 1

Resins 1 to 4 were subjected to the following treatment:
In a beaker, 150 g of the respective resin and 90 g of solvent were mixed and intensely stirred at 500 rpm. Additionally, 2 g of further additives (including quenchers) were added and the blend was stirred for further 5 minutes at 1000 rpm.

Within a period of three days after the treatment, the blends made with the resins 1 and 2 showed turbidity while the blends of the resins 3 and 4 remained clear.

## Claims

1. A benzyl ether type resin made from at least one or more hydroxybenzoic acid compounds according to formula (I), one or more phenol compounds according to formula (II), and one or more carbonyl compounds according to formula (III): 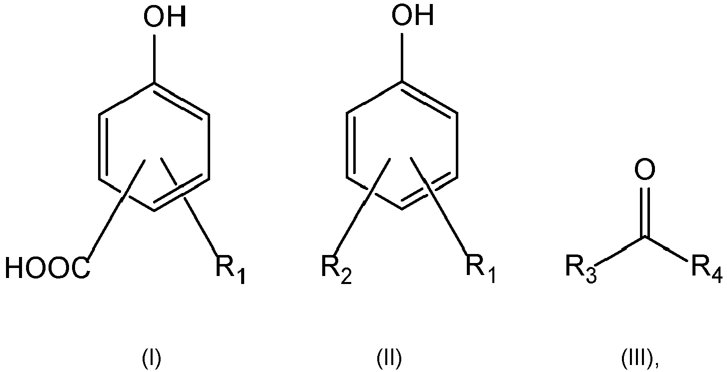 wherein:
each R₁ is independently selected from hydrogen and saturated or unsaturated, straight-chained or branched C1 to C26 alkyl in an ortho-, meta- or para-position with respect to the phenolic hydroxy group;
each R₂ is independently selected from hydrogen, -OH, -CH₂C₆H₅ (benzyl), -OCH₃, -CH₂OH and -CH₂O-R with R being saturated or unsaturated, straight-chained or branched C1 to C9 alkyl;
each R₃ is independently selected from hydrogen and saturated or unsaturated, cyclic, straight-chained or branched C1 to C7 alkyl;
each R₄ is independently selected from hydrogen and saturated or unsaturated, cyclic, straight-chained or branched C1 to C7 alkyl.

2. The benzyl ether type resin of claim 1, wherein R₁ is independently selected from hydrogen and saturated and unsaturated, straight-chained and branched C1 to C15 alkyl in an ortho-, meta- or para-position with respect to the phenolic hydroxy group, preferably wherein R₁ = R₂ = hydrogen.

3. The benzyl ether type resin of claim 1 or claim 2, wherein in addition to the at least one or more hydroxybenzoic acid compounds according to formula (I), the one or more phenol compounds according to formula (II), and the one or more carbonyl compounds according to formula (III), the benzyl ether type resin is also made from on ore more lignin compounds, preferably wherein the one or more lignin compounds are selected from the group consisting of organosolv lignin, kraft-lignin, steam explosion lignin and mixtures thereof.

4. The benzyl ether type resin of any of claims 1 to 3, wherein the one or more phenol compounds according to formula (II) are independently selected from o-cresol, m-cresol, p-cresol, 3,5-xylenol, 3,4-xylenol, 3,4,5-trimethylphenol, 3-ethylphenol, 3,5-diethylphenol, p-butylphenol, 3,5-dibutylphenol, p-amylphenol, cyclohexylphenol, p-octylphenol, p-nonylphenol, cardanol, 3,5-dicyclohexylphenol, p-crotylphenol, p-phenylphenol, 3,5-dimethoxyphenol, p-phenoxyphenol and benzylphenol.

5. The benzyl ether type resin of any of claims 1 to 3, wherein the one or more phenol compounds according to formula (II) are independently selected from phenols or substituted phenols having 2 to 4 phenolic hydroxyl groups, preferably wherein the one or more phenol compounds are independently selected from pyrocatechol, resorcinol, hydroquinone, pyrogallol, phloroglucinol, 2,5-dimethylresorcinol, 4,5-dimethylresorcinol, 5-methylresorcinol, cardol, 5-ethylresorcinol, and Bisphenol A.

6. The benzyl ether type resin of any of claims 1 to 5, wherein the one or more carbonyl compounds according to formula (III) are independently selected from acetone, cyclopentanone, cyclohexanone, methyl ethyl ketone, glyoxal, hydroxymethylfurfural, 2,5-furandicarboxaldehyde, formaldehyde, acetaldehyde, propionaldehyde, and mixtures thereof, preferably wherein the carbonyl compound is formaldehyde.

7. The benzyl ether type resin of any of claims 1 to 6, wherein the one or more hydroxybenzoic acid compounds according to formula (I) are selected from 2-hydroxybenzoic acid (salicylic acid), 3-hydroxybenzoic acid and 4-hydroxybenzoic acid, preferably wherein the hydroxybenzoic acid compound is salicylic acid.

8. The benzyl ether type resin of any of claims 1 to 7, wherein the molar ratio of the one or more carbonyl compounds according to formula (III) to the one or more phenol compounds according to formula (II) is between 1.00 and 2.00, preferred between 1.10 and 1.90, more preferred between 1.20 and 1.80, and most preferred between 1.30 and 1.70.

9. The benzyl ether type resin of any of claims 1 to 8, wherein the amount of the one or more hydroxybenzoic acid compounds according to formula (I) based on the total amount of the resin is 0.1 - 20 wt.-%, preferred 0.2 - 10 wt.-%, more preferred 0.3 - 5 wt.-%, and most preferred 0.5 - 2 wt.-%.

10. A method for producing the benzyl ether type resin of any of claims 1 to 9, comprising the steps of:
(a) providing a mixture of one or more phenol compounds, one or more carbonyl compounds, one or more hydroxybenzoic acid compounds, a catalyst and optionally one or more solvents and/or one or more bases;
(b) reacting the mixture from step (a);
(c) isolating the reaction product from the mixture obtained in step (b);
(d) optionally adding one or more solvents and/or one or more additives, such as quenchers.

11. The method of claim 10, wherein the catalyst is a salt of a divalent metal ion selected from Mn, Zn, Cd, Mg, Co, Ni, Fe, Pb, Ca and Ba, preferably wherein the catalyst is a Zn salt, with Zinc acetate being most preferred.

12. The method of claim 10 or 11, wherein the catalyst is present in the mixture from step (a) in quantities of 0.02 to 2.0 weight percent, preferably 0.02 to 0.18 weight percent, based on the total quantity of the one or more hydroxybenzoic acid compounds according to formula (I), one or more phenol compounds according to formula (II), one or more carbonyl compounds according to formula (III).

13. The method of any of claims 10 to 12, wherein step (b) is performed at a temperature of 70 - 130°C, preferably at a temperature of 110 - 120 °C.

14. The method of any of claims 10 to 13, wherein the reaction product isolated in step (c) has a refractive index of 1.450 - 1.650, preferred 1.480 - 1.600, more preferred 1.500 - 1.580.

15. Use of the benzyl ether type resin of any of claims 1 to 9 for the production of foams, foundry materials, refractory materials, abrasive materials, construction materials, insulation materials and lubricants.
